# EUROPÄISCHE PATENTSCHRIFT

(11) **EP 3 225 469 B1**
(45) Veröffentlichungstag und Bekanntmachung des Hinweises auf die Patenterteilung: **05.09.2018**
(21) Anmeldenummer: 16201744.6
(22) Anmeldetag: 01.12.2016
(51) Int. Cl.: B60R 13/08, F01N 13/10

(54) **HITZESCHILD MIT KLAPPBAREM ABSCHIRMBLECH**
HEAT SHIELD WITH HINGED SHIELDING PLATE
BOUCLIER THERMIQUE AVEC TÔLE DÉFLECTRICE RABATTABLE

(30) Priorität: 30.03.2016 DE 102016105729
(43) Veröffentlichungstag der Anmeldung: 04.10.2017
(73) Patentinhaber: Federal-Mogul Sealing Systems GmbH, 57562 Herdorf (DE)
(72) Erfinder: Wilmking, Stefan, 70188 Stuttgart (DE); Krus, Ralf, 51789 Lindlar (DE)
(74) Vertreter: Becker Kurig Straus

(56) Entgegenhaltungen:
- EP-A1- 0 857 864
- BE-A- 531 000
- DE-A1-102013 106 651
- US-B1- 6 318 734

## Beschreibung

### Gebiet der Erfindung

Die Erfindung betrifft ein Hitzeschild zur Abschirmung des Auspuffkrümmers von Kraftfahrzeugen.

### Stand der Technik

Bei modernen Kraftfahrzeugen wird aufgrund einer immer weiteren Verbesserung des thermodynamischen Wirkungsgrades die Betriebstemperatur des Motors immer höher. Die maximale Verbrennungstemperatur des Benzins in der Verbrennungskammer erreicht die Schmelztemperatur des Platins, und sogar die Abgase des Motors können Temperaturen oberhalb des Schmelzpunktes von Aluminium besitzen. Diese hohen Betriebstemperaturen bereiten bei der Konstruktion und beim Betreiben des Kraftfahrzeuges Schwierigkeiten. Eine ausgeklügelte Hitzeführung im Motor ist erforderlich, damit die Bauteile des Kraftfahrzeuges mit langer Lebensdauer im Hochtemperaturbereich einsatzfähig sind und um beispielsweise den Fahrgastraum nicht durch die hohen Abgastemperaturen der Abgasanlage aufzuheizen.

Hierzu werden Hitzeschilder in modernen Kraftfahrzeugen in zunehmendem Maße eingesetzt. Da naturgemäß Wärmeführungsprobleme von Kraftfahrzeugtyp zu Kraftfahrzeugtyp, abhängig von vielen Faktoren, wie Leistung und Konstruktion des Motors, Anordnung der Teile unter der Motorhaube, Anfälligkeit der Teile gegenüber hohen Temperaturen bei der Luftführung unter der Motorhaube und so weiter, verschieden sind, variiert auch die optimale Form der Hitzeschilder für eine optimale Abschirmwirkung von Modell zu Modell. Aus der DE OS 4 036 261 sind gattungsgemäße Hitzeschilder zu entnehmen. Ein solches Hitzeschild besteht aus einer aus Metallblech ausgestanzten Grundplatte, deren Seitenflachen unter Bildung einer Schale abgebogen ist. In diese Schale ist eine Isolierplatte aus einem Keramikfaservlies eingelegt, welches aus Keramikfaservliesmaterial deckungsgleich zur Grundplatte ausgestanzt ist. Auf diese Isolierplatte ist eine äußere Blechplatte gelegt, und zur Befestigung der Platten untereinander werden die aufgebogenen Seitenflächen der Grundplatte umgebogen
Das so gebildete flache Zwischenprodukt wird dann mit einer, oder mehreren, mit Formwerkzeugen ausgerüsteten Prägepressen, mehrfach zur Erzielung der gewünschten Form umgebogen und mit Befestigungselementen versehen, über die dann das Hitzeschild im Motorraum befestigt werden kann.

Zur Abschirmung zum Beispiel des Auspuffkrümmers bei Kraftfahrzeugen ist es wichtig, dass der Auspuffkrümmer nicht nur einseitig abgedeckt, sondern möglichst von allen Seiten, mindestens jedoch von drei Seiten, abgeschirmt ist. Das Problem, das sich dem Konstrukteur hierbei stellt, ist, dass durch die mehrseitige Abdeckung des Auspuffkrümmers der Zugang zu dem Befestigungsbereich des Auspuffkrümmers nicht mehr gegeben ist.

US 6318734 B1 offenbart eine Dichtungs-Hitzeschild-Baugruppe, die ein integrales Trägerelement aufweist, das mit einem Hitzeschild verbunden werden kann und das eine Aussparung aufweist, um das Hitzeschild zu halten und genau zu positionieren. Dieses Dokument offenbart ein Hitzeschild nach dem Oberbegriff von Anspruch 1. Der Erfindung liegt die Aufgabe zugrunde, ein gattungsgemäßes Hitzeschild dahingehend zu verbessern, dass es relativ einfach montiert werden kann und gleichzeitig die Möglichkeit besteht, die abzuschirmenden Bauteile auch nach der Montage des Hitzeschilds ohne großen Arbeitsaufwand zugänglich zu halten.

### Zusammenfassung der Erfindung

Die Aufgabe wird erfindungsgemäß gelöst durch ein Hitzeschild für einen Motor zur Abschirmung eines Auspuffkrümmers eines Kraftfahrzeugs mit den Merkmalen des unabhängigen Anspruchs 1. Die abhängigen Ansprüche betreffen bevorzugte Das Hitzeschild umfasst ein Trägerblech, das an einer Flachdichtung zur Abdichtung eines Abgasrohrs des Auspuffkrümmers angeordnet ist und ein Wärmeabschirmblech, wobei das Trägerblech und das Wärmeabschirmblech an ihren Enden U-förmige Umbiegungen aufweisen, die derart konfiguriert sind, um miteinander in Eingriff gestellt zu werden, und wobei das Trägerblech biegbar ist, um zu ermöglichen, dass das Wärmeabschirmblech in eine wirksame Wärmeabschirmebene ein- und/oder ausgeklappt werden kann.

Gemäß einem weiteren Aspekt der vorliegenden Erfindung ist das Trägerblech als Verlängerung einer mittleren Lage der Flachdichtung ausgebildet.

Gemäß einem weiteren Aspekt weist das Trägerblech einen Bereich auf, der in Richtung des Auspuffkrümmers geneigt ist.

Gemäß einem weiteren Aspekt ist das Trägerblech mit Federklemmen mit einer Einführschräge versehen.

Gemäß einem weiteren Aspekt weist das Wärmeabschirmblech eine Form auf, die an den Auspuffkrümmer angepasst ist.

Gemäß einem weiteren Aspekt weist das Wärmeabschirmblech abgebogene Randzonen auf.

Gemäß einem weiteren Aspekt ist das Wärmeabschirmblech aus mehreren Lagen gebildet ist.

Gemäß einem weiteren Aspekt ist das Wärmeabschirmblech mit weiteren Befestigungselementen an definierten Punkten versehen.

Gemäß einem weiteren Aspekt sind die U-förmigen Umbiegungen nur in einander entsprechenden partiellen Bereichen des Trägerblechs und des Wärmeabschirmblechs ausgebildet.

Gemäß einem weiteren Aspekt sind die partiellen Bereiche rechtwinklig zum jeweiligen Ende mit seitlichen Freischnitten versehen.

Gemäß einem weiteren Aspekt befinden sich die partiellen Bereiche im Bereich der Krümmerschrauben.

Gemäß einem weiteren Aspekt weist das Trägerblech und das Wärmeabschirmblech einen, über die U-förmigen Umbiegungen hinausreichenden, Überlappungsbereich auf.

### Kurze Beschreibung der Zeichnung

Im folgenden werden beispielhafte Ausführungsformen der Erfindung unter Bezug auf die Zeichnung genauer beschrieben, wobei
Figur 1 eine Seitenansicht des erfindungsgemäßen Hitzeschilds zeigt;
Figur 2 einen Ausschnitt aus einer Draufsicht auf ein Wärmabschirmblech zeigt.

### Ausführliche Beschreibung der Erfindung

Im Folgenden werden beispielhafte Ausführungsformen der Erfindung anhand der Figuren beschrieben. Die Figuren sollen dabei die Struktur der jeweiligen Ausführungsformen verdeutlichen, sie sind jedoch nicht notwendigerweise maßstabsgetreu. Insbesondere werden sich im Allgemeinen die Größenverhältnisse und die Formen der Bauteile von den in den Figuren gezeigten unterscheiden.

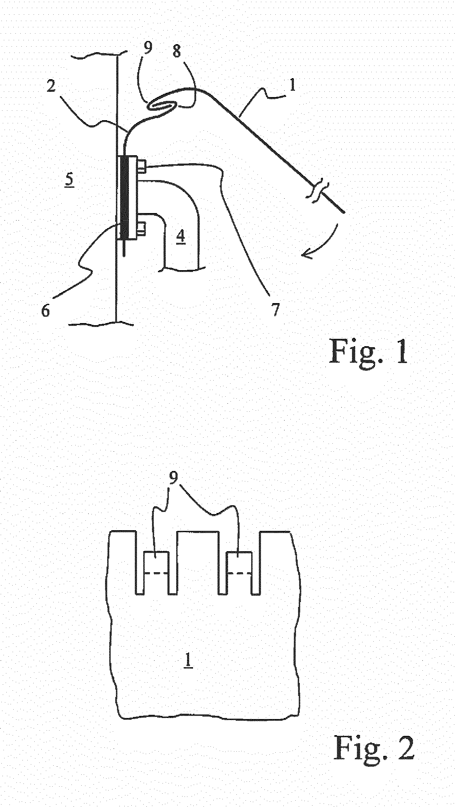

In Figur 1 ist eine beispielhafte Ausführungsform des Hitzeschilds der vorliegenden Erfindung dargestellt. Das Hitzeschild soll die vom Auspuffkrümmer 4 ausgehenden Wärme abschirmen und somit hitzeempfindliche Komponenten im Motorraum und am Motor 5 selbst schützen. Das Hitzeschild weist zwei Teile auf, ein Abschirmblech 1, das in die Abschirmebene gebogen wird, und ein Trägerblech 2, das an einer Flachdichtung 6, welche die Verbindung des Abgasrohrs des Krümmers 4 mit dem Motor 5 abdichtet, angeordnet ist.

Bevorzugt ist das Trägerblech 2 kombiniert mit einer Abgaskrümmerdichtung 6, wobei die Abgaskrümmerdichtung 6 Dichtungsfunktionslagen, Krümmerflansch-seitig und Zylinderkopf-seitig, sowie eine mittleren Lage, die in der Verlängerung als Trägerblech 2 für ein Abschirmblech 1 ausgebildet ist, aufweist. Die mittlere Lage der Abgaskrümmerdichtung ist hierbei nach oben bis außerhalb der Krümmerflanschgeometrie verlängert und in der dargestellten Ausführungsform in Richtung Abgaskrümmer 4 geneigt. Die mittlere Lage bzw. das Trägerblech 2, übernimmt so einen Teil der Hitzeabschirmfunktion vom Krümmerflansch in Richtung Zylinderkopf, Zündkabel, Zündkerzenstecker und anderen temperaturempfindlichen Bauteilen wie Ventilhaubendichtung oder Zündspulen etc.

Damit sich der Abgaskrümmer 4 trotz des, als Verlängerung der mittleren Dichtungslage gebildeten, Trägerblechs 2 bei der Montage verschrauben lässt, ist das Trägerblech 2, um ausreichend Raum für die Montagewerkzeuge zu lassen, in seiner Länge und Winkelstellung zum Zylinderkopf so ausgelegt, dass es einerseits am Zylinderkopf oder an Zylinderkopfbauteilen anliegt und andererseits Kontakt zu den Schraubwerkzeugen bei der Abgaskrümmermontage hat.

Weiterhin ist die obere Kante (oder nur partielle Bereiche) der mittleren Lage, d.h. des Trägerblechs 2, als eine Art offene U-förmige Abkantung ausgelegt, es ist sozusagen eine U-förmige Umbiegung 8 der Blechkante gebildet. So wird ermöglicht, ein Wärmeabschirmblech 1, dessen Kante ebenfalls als eine Art offene U-förmige Umbiegung 9 ausgebildet ist von oben auf das Trägerblech 2 zu stecken und in den Umbiegungen zu verrasten. Die U-förmigen Umbiegungen 8, 9 sind also so konfiguriert, dass sie miteinander in Eingriff gestellt werden können. Das bedeutet insbesondere, dass die U-förmigen Umbiegungen 8, 9 der Kanten der Bleche 1, 2 an einander entsprechenden Bereichen der Enden/Stirnseiten der Bleche ausgebildet sind.

Da das Trägerblech 2 nach dem in Eingriff stellen mit dem Wärmeabschirmblech 1 noch immer am Zylinderkopf und an anderen Bauteilen anliegt, wird es während der Montage des Wärmeabschirmblechs 1 durch Herunterbiegen und Verschrauben des Wärmeabschirmblechs 1 in die endgültige Position gebogen.

Um das Aufstecken des Wärmeabschirmblechs 1 zu vereinfachen und zu führen, können an dem Trägerblech 2 noch Federklemmen mit einer Einführschräge angebracht sein. Diese würden auch dafür sorgen, dass beide Bleche mit ihren offenen U-förmigen Umbiegungen 8, 9 ineinander rutschen und in ihrer Position verrasten. Andere Positionierungshilfen, wie in etwa aus dem Trägerblech 2 herausgedrückte Nasen, können auch zur Anwendung kommen.

Das Wärmeabschirmblech 1 wird nach dem Herunterbiegen zusätzlich zu der Verrastung mit dem Trägerblech 2 an einem oder mehreren definierten Punkten befestigt. Dies kann durch Verschrauben, oder andere geeignete Befestigungsmittel geschehen. Durch das Herunterbiegen und Befestigen wird gleichzeitig im Bereich der miteinander in Eingriff stehenden U-förmigen Umbiegungen eine Spannung aufgebaut, so dass das Trägerblech 2 und das Wärmeabschirmblech 1 an den U-förmigen Umbiegungen 8, 9 fest miteinander verhakt werden und das Wärmeabschirmblech 1 somit fest angebracht werden kann, ohne etwaiges Wackeln.

Alternativ, oder auch zusätzlich, zur Verrastung des Trägerblechs 2 mit dem Wärmeabschirmblech 1 über die offenen U-förmigen Abkantungen/Umbiegungen ist es ebenfalls möglich das Trägerblech mit dem Abschirmblech fest zu vernieten. Diese Variante ist allerdings nur dann anwendbar, wenn bei aufgeklapptem Abschirmblech 1 genug Freigang für das Montagewerkzeug zur Verschraubung der Krümmerschrauben gegeben ist.

Um das Herunterbiegen des Trägerblechs 1 zu erleichtern ist es vorteilhaft, dass die Biegelinien gerade verlaufen. Da dies über die gesamte Krümmerdichtungslänge, d.h. der Ausdehnung der Krümmerdichtung in vertikaler Richtung zur Zeichenebene in Figur 1, meist nicht möglich ist, werden in einer Ausführungsform nur partielle Bereiche (deren Biegelinien gerade verlaufen) für die Verbindung über U-förmige Verrastung oder feste Vernietung mit dem Abschirmblech 1 verwendet.

In Figur 2 ist hierzu ein Ausschnitt aus einer Draufsicht auf ein Wärmeabschirmblech 1 dargestellt, das nicht dargestellte Trägerblech 2 wird analog gestaltet. In der Figur sind die Umbiegungen gebildet indem die Blechkanten in den entsprechenden partiellen Bereichen nach unten herum gebogen wurden. In diesem Fall werden die partiellen Bereiche, die mit U-förmigen Umbiegungen 9 versehen sind, beispielsweise seitlich mittels Freischnitten vom Rest des Blechs "entkoppelt". Ebenso wird das Trägerblech nur an entsprechenden partiellen Bereichen mit Umbiegungen ausgebildet, auch dort können Freischnitte angebracht sein, die diese partiellen Bereiche vom Rest des Trägerblechs "entkoppeln". Vorzugsweise liegen diese Bereiche über den Krümmerschrauben 7. So müssen auch nur diese Bereiche zu Montage des Krümmers 4 nach oben in Richtung Zylinderkopf gebogen sein und die restliche Geometrie des Trägerblechs 2 kann schon in die Endposition gebogen sein. Hierdurch würde sich auch der Kraftaufwand zum Herunterbiegen des Trägerblechs reduzieren da nur die freigeschittenen kurzen partiellen Bereiche herunter gebogen werden müssen.

Da die mittlere Lage der Dichtung 6, und somit das Trägerblech 2, meist nur aus einem dünnen einlagigen Blech besteht, ist die Abschirmwirkung in diesem Bereich eher schlecht. Um eine ausreichende Abschirmwirkung auch im Bereich über dem Trägerblech 2 zu erreichen, kann dieser Bereich noch zusätzlich von dem Abschirmblech 1 überlappt werden. Bei der in Figur 2 beispielhaft gezeigten Ausführungsform reichen hierzu Bereiche des Abschirmblechs 1 über die Umbiegungen 9 hinaus.

Das Wärmeabschirmblech 1 kann aus mehreren Lagen gebildet sein, um die Abschirmwirkung zu verbessern. Weiter kann die Form des Wärmeabschirmblechs 1 an die Krümmergeometrie angepasst sein, das Wärmeabschirmblech 1 kann zum Beispiel so geformt sein, dass es der Krümmergeometrie folgend möglichst nah am Krümmer anliegt und somit platzsparend eingebaut werden kann. Ebenso kann das Wärmeabschirmblech 1 abgebogene Randzonen aufweisen, die eine Abschirmwirkung nach drei Seiten des Krümmers ermöglichen.

## Patentansprüche

1. Hitzeschild für einen Motor (5) zur Abschirmung eines Auspuffkrümmers (4) eines Kraftfahrzeugs, umfassend:
ein Trägerblech (2), das an einer Flachdichtung (6) zur Abdichtung eines Abgasrohrs des Auspuffkrümmers (4) angeordnet ist;
ein Wärmeabschirmblech (1);
wobei das Trägerblech (2) an einem Ende eine U-förmige Umbiegung (8) aufweist und
wobei das Trägerblech (2) biegbar ist, um zu ermöglichen, dass das Wärmeabschirmblech (1) in eine Wärmeabschirmebene ein- und/oder ausgeklappt werden kann;
**dadurch gekennzeichnet, dass**
das Wärmeabschirmblech (1) an einem Ende eine U-förmige Umbiegung (9) aufweist, wobei die U-förmigen Umbiegungen (8, 9) an den Enden von Trägerblech (2) und
Wärmeabschirmblech (1) derart konfiguriert sind, um miteinander in Eingriff gestellt zu werden; und dass
das Trägerblech (2) und das Wärmeabschirmblech (1) einen, über die U-förmigen Umbiegungen (8, 9) hinausreichenden, Überlappungsbereich aufweisen.

2. Hitzeschild gemäß Anspruch 1, wobei das Trägerblech (2) als Verlängerung einer mittleren Lage der Flachdichtung (6) ausgebildet ist.

3. Hitzeschild gemäß einem der vorstehenden Ansprüche, wobei das Trägerblech (2) einen Bereich aufweist, der in Richtung des Auspuffkrümmers (4) geneigt ist.

4. Hitzeschild gemäß einem der vorstehenden Ansprüche, wobei das Trägerblech (2) mit Federklemmen mit einer Einführschräge versehen ist.

5. Hitzeschild gemäß einem der vorstehenden Ansprüche, wobei das Wärmeabschirmblech (1) eine Form aufweist, die an den Auspuffkrümmer angepasst ist.

6. Hitzeschild gemäß einem der vorstehenden Ansprüche, wobei das Wärmeabschirmblech (1) abgebogene Randzonen aufweist.

7. Hitzeschild gemäß einem der vorstehenden Ansprüche, wobei das Wärmeabschirmblech (1) aus mehreren Lagen gebildet ist.

8. Hitzeschild gemäß einem der vorstehenden Ansprüche, wobei das Wärmeabschirmblech (1) mit weiteren Befestigungselementen an definierten Punkten versehen ist.

9. Hitzeschild gemäß einem der vorstehenden Ansprüche, wobei die U-förmigen Umbiegungen (8, 9) des Trägerblechs (2) und des Wärmeabschirmblechs (1) nur in einander entsprechenden partiellen Bereichen des Trägerblechs (2) und des Wärmeabschirmblechs (1) ausgebildet sind.

10. Hitzeschild gemäß Anspruch 9, wobei die partiellen Bereiche rechtwinklig zum jeweiligen Ende mit seitlichen Freischnitten versehen sind.

11. Hitzeschild gemäß Anspruch 9 oder 10, wobei sich die partiellen Bereiche im Bereich der Krümmerschrauben (7) befinden.

## Claims

1. A heat shield for an engine (5) for shielding an exhaust manifold (4) of a motor vehicle, comprising:
a support plate (2) arranged on a flat gasket (6) for sealing an exhaust pipe of the exhaust manifold (4);
a heat shielding plate (1);
wherein the support plate (2) has a U-shaped bend (8) at one end, and wherein the support plate (2) is bendable to allow the heat shielding plate (1) to be folded into and/or out of a heat shielding plane;
**characterized in that**
the heat shielding plate (1) has a U-shaped bend (9) at one end, wherein the U-shaped bends (8, 9) at the ends of support plate (2) and heat shielding plate (1) are configured to engage with each other; and that
the support plate (2) and the heat shielding plate (1) have an overlap area protruding beyond the U-shaped bends (8, 9).

2. The heat shield according to claim 1, wherein the support plate (2) is formed as an extension of a middle layer of a flat gasket (6).

3. The heat shield according to any one of the preceding claims, wherein the support plate (2) has an area that is inclined towards the exhaust manifold (4).

4. The heat shield according to any one of the preceding claims, wherein the support plate (2) is provided with spring clips with an insertion chamfer.

5. The heat shield according to any one of the preceding claims, wherein the heat shielding plate (1) has a shape that is adapted to the exhaust manifold.

6. The heat shield according to any one of the preceding claims, wherein the heat shielding plate (1) has bent edge zones.

7. The heat shield according to any one of the preceding claims, wherein the heat shielding plate (1) is formed from a plurality of layers.

8. The heat shield according to any one of the preceding claims, wherein the heat shielding plate (1) is provided with further attachment points at defined points.

9. The heat shield according to any one of the preceding claims, wherein the bends (8, 9) of the support plate (2) and the heat shielding plate (1) are formed only in partial areas of the support plate (2) and the heat shielding plate (1) that correspond to each other.

10. The heat shield according to claim 9, wherein the partial areas are provided with lateral clearance cuts perpendicular to the respective end.

11. The heat shield according to claim 9 or 10, wherein the partial areas are located in the area of the manifold screws (7).

## Revendications

1. Bouclier thermique pour un moteur (5) pour protéger un collecteur d'échappement (4) d'un véhicule automobile, comprenant :
une tôle porteuse (2), qui est disposée sur un joint d'étanchéité plat (6) pour étanchéifier un tuyau d'échappement du collecteur d'échappement (4),
une tôle déflectrice de chaleur (1),
la tôle porteuse (2) comportant à une extrémité un pliage en forme de U (8) et la tôle porteuse (2) pouvant être pliée pour permettre que la tôle déflectrice de chaleur (1) puisse être pliée et/ou rabattue dans un plan déflecteur de chaleur,
**caractérisé en ce que**
la tôle déflectrice de chaleur (1) comporte à une extrémité un pliage en forme de U (9), les pliages en forme de U (8, 9) aux extrémités de la tôle porteuse (2) et de la tôle déflectrice de chaleur (1) sont configurés de sorte à pouvoir être mis en prise l'un avec l'autre et **en ce que**
la tôle porteuse (2) et la tôle déflectrice de chaleur (1) comportent une zone de chevauchement passant sur les pliages en forme de U (8, 9).

2. Bouclier thermique selon la revendication 1, la tôle porteuse (2) étant constituée comme prolongation d'une couche centrale du joint d'étanchéité plat (6).

3. Bouclier thermique selon l'une quelconque des revendications précédentes, la tôle porteuse (2) comportant une zone qui est inclinée en direction du collecteur d'échappement (4).

4. Bouclier thermique selon l'une quelconque des revendications précédentes, la tôle porteuse (2) étant dotée d'attaches à ressort avec un chanfrein d'introduction.

5. Bouclier thermique selon l'une quelconque des revendications précédentes, la tôle déflectrice de chaleur (1) comportant une forme qui est adaptée au collecteur d'échappement.

6. Bouclier thermique selon l'une quelconque des revendications précédentes, la tôle déflectrice de chaleur (1) comportant des zones de bord courbées.

7. Bouclier thermique selon l'une quelconque des revendications précédentes, la tôle déflectrice de chaleur (1) étant formée de plusieurs couches.

8. Bouclier thermique selon l'une quelconque des revendications précédentes, la tôle déflectrice de chaleur (1) étant dotée d'autres éléments de fixation à des points définis.

9. Bouclier thermique selon l'une quelconque des revendications précédentes, les pliages en forme de U (8, 9) de la tôle porteuse (2) et de la tôle déflectrice de chaleur (1) n'étant constitués que dans des zones partielles correspondantes les unes aux autres de la tôle porteuse (2) et de la tôle déflectrice de chaleur (1).

10. Bouclier thermique selon la revendication 9, les zones partielles étant dotées de découpes latérales à angle droit par rapport aux extrémités respectives.

11. Bouclier thermique selon la revendication 9 ou 10, les zones partielles se trouvant dans la zone des vis de collecteur (7).
